# FASCICULE DE BREVET EUROPEEN

(11) **EP 2 107 264 B1**
(45) Date de publication et mention de la délivrance du brevet: **01.09.2010**
(21) Numéro de dépôt: 09157144.8
(22) Date de dépôt: 02.04.2009
(51) Int. Cl.: F16D 48/06

(54) **Procédé de détermination automatique du point de léchage d'un embrayage par apprentissage**
Verfahren zur automatischen Bestimmung des Schleifpunktes einer Kupplung durch Lernen
Method for automatically determining the biting point of a clutch by teach programming

(30) Priorité: 04.04.2008 FR 0852285
(43) Date de publication de la demande: 07.10.2009
(73) Titulaire: Peugeot Citroën Automobiles SA, 78140 Vélizy-Villacoublay (FR)
(72) Inventeur: Launay, Cédric, 78680, EPONE (FR); Rocq, Gaëtan, 78125, LA BOISSIERE-ECOLE (FR)

(56) Documents cités:
- EP-A- 1 596 086
- WO-A-2008/041620
- WO-A-2008/064633
- DE-A1-102005 028 345
- FR-A- 2 819 454
- FR-A- 2 887 606
- US-A1- 2006 089 232
- US-A1- 2007 275 823

## Description

### Domaine technique

L'invention concerne un procédé de détermination du point de léchage d'un embrayage par apprentissage sur un véhicule hybride. L'invention a pour but notamment de faciliter la détermination du point de léchage de l'embrayage assurant le couplage et le découplage entre un moteur thermique et une machine électrique. L'invention trouve une application particulièrement avantageuse dans le domaine des véhicules automobiles, notamment les véhicules de type hybride.

### Etat de la technique

Un véhicule hybride exploite deux types d'énergie, une énergie thermique et une énergie électrique dont la combinaison permet de garantir la traction du véhicule, tout en optimisant le rendement énergétique. Le véhicule hybride permet ainsi de diminuer la consommation en carburant du véhicule et du même coup la pollution.

On connaît les véhicules hybrides de type parallèle qui comportent un moteur thermique et une machine électrique reliés entre eux par l'intermédiaire d'un embrayage.

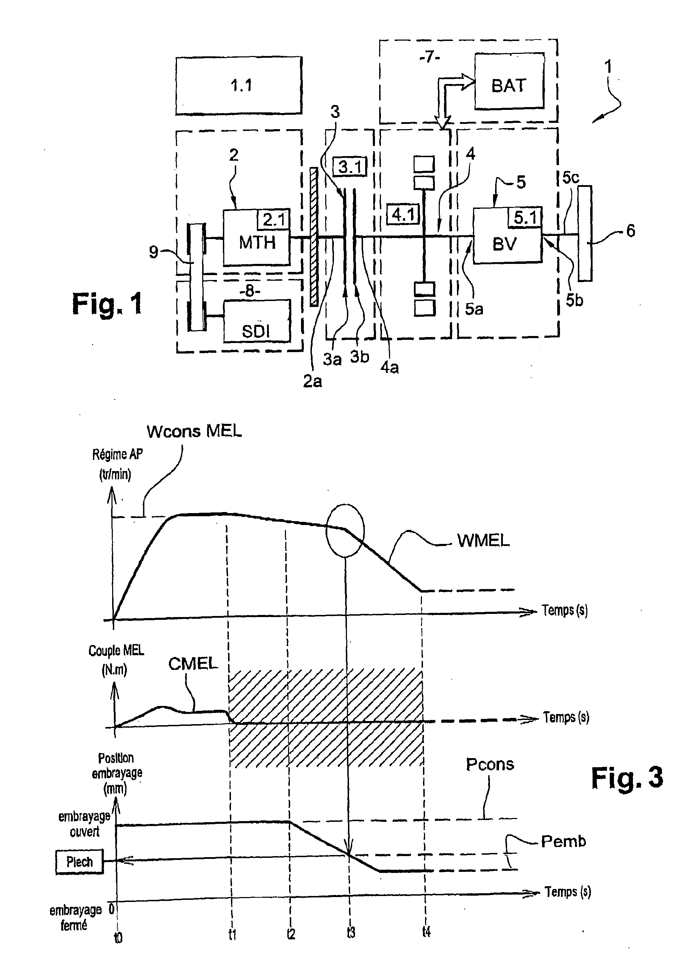

L'architecture d'un tel véhicule est illustrée sur la figure 1 qui montre un dispositif 1 de transmission comportant un moteur thermique 2, un embrayage 3, une machine électrique 4, une boîte de vitesses 5, et des roues 6 formant une chaîne de traction.

Plus précisément, l'embrayage 3 comporte un premier et un deuxième disque 3a et 3b d'embrayage. Le premier disque 3a est relié à un arbre 2a du moteur thermique 2. Et le deuxième disque 3b est relié à un arbre 4a de la machine électrique 4. En outre, l'arbre 4a de la machine électrique 4 et un arbre 5c des roues 6 sont reliés respectivement à une entrée 5a et à une sortie 5b de la boîte de vitesses 5.

Le moteur thermique 2, est démarré par l'intermédiaire d'un système 8 de démarrage indépendant qui lui est relié par l'intermédiaire d'une courroie.

Le dispositif 1 de transmission est susceptible de fonctionner dans deux modes de fonctionnement. Dans un mode électrique, seule la machine électrique 4 fournit du couple aux roues. L'embrayage 3 reste alors ouvert de sorte que l'arbre 2a du moteur thermique 2 et l'arbre 4a de la machine électrique 4 sont désaccouplés l'un de l'autre. Dans ce mode, la machine électrique 4 prélève de l'énergie au système de stockage d'énergie 7 tel qu'une batterie, et fonctionne en mode moteur.

Dans le mode hybride, l'arbre 5c des roues 6 est entraîné à la fois par le moteur thermique 2 et la machine 4. L'embrayage 3 est alors fermé, de sorte que l'arbre 2a du moteur thermique 2 et l'arbre 5c des roues 6 sont accouplés entre eux. Dans ce mode, la machine 4 fonctionne soit en mode moteur pour transmettre du couple aux roues 6 en parallèle du couple fourni par le moteur thermique afin d'ajuster le couple appliqué aux roues, soit en mode générateur afin de recharger la batterie 7, la machine étant alors entrainée par le moteur thermique 2.

Dans les deux modes, dans la phase de freinage, la machine électrique fonctionne en génératrice de manière à transformer l'énergie cinétique du véhicule en énergie électrique pour la batterie.

Chaque organe 2 à 5 est commandé par un calculateur de contrôle 2.1, 3.1, 4.1, 5.1 propre. Ces calculateurs de contrôle 2.1, 3.1, 4.1, 5.1 sont eux-mêmes contrôlés par un calculateur 1.1 unique dit de supervision. Ce calculateur de supervision 1.1 est apte à synchroniser les actionnements des différents organes 2 à 5 afin de répondre à la volonté du conducteur.

L'ensemble des calculateurs de contrôle 2.1, 3.1, 4.1, 5.1 est apte à piloter la chaîne de traction du véhicule (augmenter ou diminuer la vitesse du moteur thermique 2 et/ou de la machine électrique 4) et sélectionner un mode de roulage du véhicule (mode urbain, mode économique, mode non polluant, mode sportif...), en fonction des différentes situations de vie et de l'état du véhicule. Le calculateur de supervision 1.1 est également apte à coordonner toutes les phases transitoires et choisit les points de fonctionnement de la machine électrique 4 et du moteur thermique 3 afin notamment d'optimiser la consommation en carburant.

Un point de léchage permet de recaler la fonction de transfert entre la position d'un actionneur de l'embrayage 3 et le couple transmis par cet embrayage 3 et ainsi maîtriser ledit couple transmis par l'embrayage 3.

Dans l'état de la technique, un apprentissage et un recalage du point de léchage d'une chaîne de traction non hybride à transmission Mécanique Compact Pilotée (MCP), est effectué à chaque démarrage du véhicule. Cet apprentissage et ce recalage du point de léchage est effectué à chaque démarrage du véhicule afin de prendre en compte l'état d'usure de l'actionneur de l'embrayage et/ou les dispersions relatives à la commande de cet actionneur dûs aux phénomènes thermiques.

En revanche, pour un véhicule comportant une chaîne de traction hybride à transmission mécanique compact pilotée, communément appelé boite MCP-H, l'apprentissage du point de léchage grâce au moteur thermique 2 ne peut pas être effectué lors du démarrage du véhicule. Car, dans ces véhicules, la traction au démarrage est effectuée par la machine électrique 4. Le moteur thermique 2 reste donc à l'arrêt. L'apprentissage du point de léchage n'est donc possible, qu'une seule fois, généralement au début de la vie du véhicule hybride, en fin de chaîne de montage, ou en service après vente.

Cependant, l'apprentissage du point de léchage ne tient pas compte des phénomènes dynamiques cités auparavant tel que l'usure ou les dispersions suite aux phénomènes thermiques. En effet, l'apprentissage du point de léchage se fait en début de vie du véhicule hybride mais durant toute la vie du véhicule, le point de léchage se déplace en fonction de l'usure des différents éléments constituant l'embrayage. Il existe donc un besoin de recaler ledit point de léchage en fonction des phénomènes ayant tendance à le décaler.

### Exposé de l'invention

La présente invention comble ce besoin en proposant un procédé de détermination du point de léchage d'un système d'embrayage par apprentissage, dans lequel :
- on vérifie que le moteur thermique est à l'arrêt et que l'embrayage est ouvert,
- on régule le régime de la machine électrique vers un régime de consigne,
- on régule le couple de la machine électrique vers une valeur nulle, lorsque le régime de la machine électrique a atteint son régime de consigne,
- on mémorise la décélération du régime de la machine électrique,
- on ferme progressivement l'embrayage, de sorte qu'un couple résistif est transmis par l'embrayage à la machine électrique pour perturber son régime, et
- on mémorise la position de l'actionneur de l'embrayage, correspondant au point de léchage dès qu'une variation de la décélération de ladite machine est supérieure à une valeur seuil.

Dans ce contexte, l'invention permet l'apprentissage et le recalage du point de léchage du système d'embrayage sans nécessiter le démarrage du moteur thermique lors des démarrages du véhicule hybride. L'invention permet d'avoir une précision de détection du point de léchage qui ne dépend pas de la qualité du régulateur de régime de la machine électrique.

L'invention permet également un apprentissage du point de léchage qui se fait durant une phase où la machine électrique a un comportement linéaire, c'est-à-dire une phase où les pertes de la machine électrique et de la boîte de vitesse sont linéaires.

L'invention permet en outre de garantir une prestation constante du contrôle en couple de l'embrayage et par conséquent de la chaîne de traction hybride sur la durée de vie du véhicule.

Plus précisément, l'invention a pour objet un procédé de détermination du point de léchage d'un embrayage d'un véhicule de type hybride au démarrage, ledit véhicule comportant un moteur thermique et une machine électrique couplés entre eux par l'intermédiaire de l'embrayage caractérisé en ce qu'il comporte les étapes suivantes,
- on vérifie que le moteur thermique est à l'arrêt et que l'embrayage est ouvert,
- on régule le régime de la machine électrique, vers un régime de consigne,
- on régule le couple de la machine électrique vers une valeur nulle, lorsque le régime de la machine électrique a atteint son régime de consigne,
- on mémorise la décélération du régime de la machine électrique,
- on ferme progressivement l'embrayage, de sorte qu'un couple résistif est transmis par l'embrayage à la machine électrique pour perturber son régime, et
- on mémorise la position de l'actionneur de l'embrayage, correspondant au point de léchage dès qu'une variation de la décélération de ladite machine est supérieure à une valeur seuil.

L'invention comporte l'une quelconque des caractéristiques suivantes :
- pour calculer la décélération,
   - on mesure à intervalle régulier le régime de la machine et,
   - on fait la différence entre le dernier régime mémorisé et le régime mémorisé précédent,
- l'intervalle entre les deux valeurs de régime est calibrable,
- l'embrayage demeure ouvert au moins jusqu'à ce que l'on ait atteint le régime de consigne de la machine électrique et que son couple soit nulle,
- la fermeture de l'embrayage s'effectue une fois que le régime de la machine électrique est stabilisé à son régime de consigne,
- la valeur seuil est calibrable,
- la détermination de la position de l'actionneur de l'embrayage s'effectue au moyen d'un capteur de position,
- une fois que le point de léchage est déterminé, l'embrayage est ré-ouvert.

### Brèves description des dessins

L'invention sera mieux comprise à la lecture de la description qui suit et à l'examen des figures qui l'accompagnent. Celles-ci sont présentées à titre indicatif et nullement limitatif de l'invention.
La figure 1 (déjà décrite) représente schématiquement un dispositif de transmission utilisé avec le procédé selon l'invention ;
La figure 2 représente un diagramme fonctionnel des différentes étapes du procédé selon l'invention ;
La figure 3 montre des chronogrammes de signaux observables sur les différents organes 2 à 5 du dispositif 1 de la figure 1 lors de la mise en oeuvre du procédé selon l'invention.

### Description détaillée de modes de réalisation de l'invention

Les caractéristiques décrites et d'autres caractéristiques de l'invention résultent de la description suivante des modes de réalisation préférés.

Chaque véhicule hybride comporte un dispositif 1 de transmission de couple aux roues 6 comprenant des organes 2-5 et 7-8 tels qu'illustrés à la figure 1. Chacun des organes 2-5 est associé respectivement à un calculateur de contrôle 2.1, 3.1, 4.1, 5.1 et au moins à un capteur (non représenté). Un calculateur de contrôle 2.1, 3.1, 4.1, 5.1 est destiné à piloter l'organe 2-5 auquel il est associé.

Chaque calculateur de contrôle 2.1, 3.1, 4.1, 5.1 est apte à recevoir des données provenant des capteurs de l'organe 2-5 et 7-8 respectif associé. Tous les calculateurs 2.1, 3.1, 4.1, 5.1 sont commandés par un calculateur de supervision 1.1 qui a pour tâche d'harmoniser le fonctionnement des organes 2-5, de manière à pouvoir prendre des décisions et à synchroniser les actions des calculateurs 2.1, 3.1, 4.1, 5.1 pour répondre à la volonté d'un conducteur. Les calculateurs de contrôle 2.1, 3.1, 4.1, 5.1 et le calculateur de supervision 1.1 comportent chacun notamment, une mémoire programme, une mémoire de données connectées toute deux à un microprocesseur.

Dans la description, on prête des actions aux calculateurs 1.1, 2.1, 3.1, 4.1, 5.1 et aux programmes qu'ils exécutent, cela signifie que ces actions sont commandées par les microprocesseurs des calculateurs comportant lesdits programmes, lesdits microprocesseurs étant alors commandés par les codes d'instruction enregistrés dans les mémoires des calculateurs. Ces codes d'instruction permettent de commander les organes reliés aux calculateurs et donc de réaliser l'action entreprise.

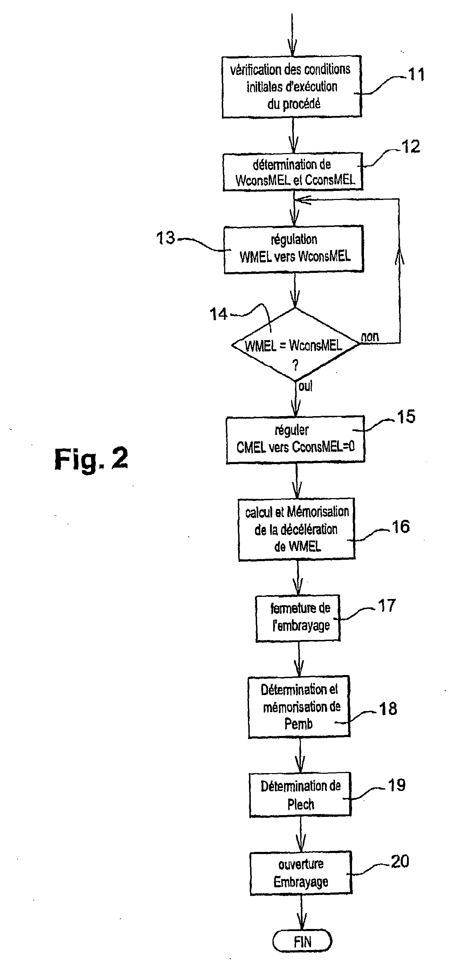

La figure 2 est un exemple de diagramme fonctionnel du procédé selon l'invention. Ce diagramme montre une étape préliminaire 11 dans laquelle le calculateur de supervision 1.1 effectue des étapes de vérification des conditions initiales, selon le procédé de l'invention.

Ainsi, dans une première étape de vérification, le calculateur de supervision 1.1 envoie une requête d'interrogation sur l'état de fonctionnement du moteur thermique 2 au calculateur de contrôle 2.1 associé à ce moteur 2. Ledit calculateur de contrôle 2.1 détermine au moyen de capteurs du moteur 2, si ce dernier est à l'arrêt.

Si le moteur 2 est à l'arrêt, le calculateur de contrôle 2.1 du moteur 2 renvoie, par exemple, la valeur 0 au calculateur de supervision 1.1, sinon la valeur 1.

Dans une deuxième étape de vérification, le calculateur de supervision 1.1 envoie une requête d'interrogation sur l'état de fonctionnement de l'embrayage 3 au calculateur de contrôle 3.1 associé à cet embrayage 3. Ledit calculateur de contrôle 3.1 détermine au moyens de capteurs de position (non représenté) de l'embrayage 3, si ce dernier est ouvert. Si l'embrayage est ouvert, le calculateur de contrôle 3.1 de l'embrayage 3 renvoie, par exemple, la valeur 1 au calculateur de supervision 1.1, le calculateur de contrôle 3.1 renvoyant la valeur 0 dans les autres cas.

Dans une troisième étape de vérification, le calculateur de supervision 1.1, le calculateur envoie une requête d'interrogation sur l'état de fonctionnement de la boite de vitesse 5 au calculateur de contrôle 5.1 associé à cette boite de vitesse 5. Ledit calculateur de contrôle 5.1 détermine au moyens de capteurs de la boîte de vitesse, si ce dernier est au neutre. Si la boite de vitesse 5 est au neutre, le calculateur de contrôle 5.1 renvoie, par exemple, la valeur 0 au calculateur de supervision 1.1, sinon la valeur 1.

Lorsque la première et la deuxième étape de vérification sont validées, on passe à l'étape 12.

Dans cette étape 12, le calculateur de supervision 1.1 détermine un régime et un couple de consigne de la machine électrique 4 correspondant respectivement à WconsMEL et CconsMEL. Ce régime et ce couple de consignes WconsMEL et CconsMEL peuvent être stockés dans la mémoire de données du calculateur de supervision 1.1. Ils peuvent être également stockés dans la mémoire de données du calculateur de contrôle 4.1 associées à la machine électrique 4.

Ensuite, à l'étape 13, le calculateur de contrôle 4.1 associé à la machine électrique 4 régule le régime WMEL de celle-ci à la consigne WconsMEL émit par le calculateur de supervision 1.1.

Dans l'étape 14, le calculateur de supervision 1.1 vérifie que le régime WMEL de la machine électrique 4 soit égal à la consigne WconsMEL.

Lors d'une étape 15, le calculateur de contrôle 4.1 associé à la machine électrique 4 diminue le couple CMEL de la machine électrique 4 vers la valeur de consigne CconsMEL nulle émis par le calculateur de supervision 1.1. Lorsque le couple CMEL de la machine électrique 4 présente une valeur nulle, la machine électrique 4 décélère.

Lors d'une étape 16, le calculateur de supervision 1.1 détermine et mémorise la décélération naturelle du régime WMEL de la machine électrique 4.

Lors d'une étape 17, le calculateur de supervision 1.1 émet une fermeture progressive de l'embrayage 3 afin de transmettre un couple résistif à la machine électrique 4. Le calculateur de contrôle 3.1 associé à l'embrayage 3, pilote l'actionneur d'embrayage 3 afin de suivre cette consigne. Ce couple résistif a pour but de perturber le régime WMEL de la machine électrique 4 de l'étape 13.

Lors d'une étape 18, le calculateur de supervision 1.1 détermine, à partir des données mémorisées de décélération du régime WMEL de la machine électrique 4, la différence entre les deux dernières données successives enregistrées. Dès l'instant t3 où cette différence est supérieure à un seuil, le régime WMEL de la machine électrique 4 diminue. Le calculateur de supervision 1.1 détermine à l'instant t3 la position Pemb de l'embrayage 3 fournie par un capteur de position de l'embrayage 3 et la mémorise.

Lors de l'étape 19, le calculateur de supervision 1.1 détermine un point de léchage Plech à partir de la position Pemb à l'instant t3 de l'embrayage 3.

Lors d'une étape 20, le calculateur de supervision 1.1 effectue une ouverture de l'embrayage 3, pour finir la procédure d'apprentissage.

On comprend de ce qui précède que le procédé est réitéré autant de fois que le système ou qu'un opérateur, par exemple un garagiste, le juge nécessaire pour recaler le point de léchage Plech de l'embrayage 3.

La figure 3 montre des chronogrammes de signaux observables sur les différents organes 3 à 4 du dispositif de la figure 1 lors de la mise en oeuvre du procédé de l'invention. Ces signaux sont observables lorsqu'une procédure d'apprentissage est demandée.

Plus précisément, la figure 3 montre le signal de régime WMEL observable de la machine électrique 4, le signal de couple CMEL de la machine électrique 4 et le signal correspondant à la position Pemb de l'actionneur de l'embrayage 3.

La figure 3 montre également l'évolution dans le temps de la consigne du régime WconsMEL de la machine électrique 4 et la consigne de la position Pcons de l'actionneur de l'embrayage 3. Les signaux définis précédemment sont émis respectivement par un capteur de régime de la machine électrique 4, un capteur ou estimateur de couple de la machine électrique 4 et un capteur de position de l'actionneur de l'embrayage 3.

A l'instant t0, le véhicule est à l'arrêt. La machine électrique 4 et le moteur thermique 2 possèdent tous deux une vitesse nulle. A l'instant t0, le conducteur ou l'opérateur démarre le véhicule hybride.

Entre les instants t0 et t1, le régime WMEL de la machine électrique 4 augmente de manière exponentielle, si bien qu'à l'instant t1, le régime WMEL s'est stabilisé autour d'une valeur WconsMEL correspondant à une consigne de régime de la machine électrique 4.

Par ailleurs, entre les instants t0 et t1, le signal de couple CMEL de la machine électrique 4 augmente linéairement durant la monté en régime de la machine électrique 4 jusqu'à ce que ledit régime WMEL se stabilise autour de WconsMEL. Lorsque le régime WMEL de la machine électrique 4 a atteint la valeur de consigne, le signal du couple CMEL de la machine électrique 4 est régulé avec une consigne de couple CconsMEL nulle.

Entre les instants t0 et t1, l'embrayage 3 reste ouvert à son maximum.

A l'instant t1, le couple CMEL de la machine électrique est nul provoquant une décélération de la machine électrique 4.

Entre les instants t1 et t2, la décélération naturelle du régime de la machine électrique 4 est progressive.

A l'instant t2, une fermeture progressive de l'embrayage 3 est effectuée.

Entre les instants t2 et t3, le dispositif 1 de traction du véhicule entre dans une troisième phase dans laquelle, la fermeture progressive de l'embrayage 3 entraîne la transmission d'un couple résistif à la machine électrique 4 perturbant ainsi le régime WMEL de la machine électrique 4. A l'instant t3, une variation du régime WMEL de la machine électrique 4 est détectée comme étant supérieure à une valeur seuil.

À l'instant t3, on détermine puis mémorise la position Pemb de l'actionneur de l'embrayage 3, et on détermine le point de léchage Plech.

Entre les instants t3 et t4, l'embrayage 3 continue à se fermer progressivement, et la décélération s'accélère.

Cette fermeture de l'embrayage 3, entraine à l'instant t4 une diminution du régime WMEL de la machine électrique 4.

## Revendications

1. Procédé de détermination du point de léchage (Plech) d'un embrayage (3) d'un véhicule de type hybride au démarrage, ledit véhicule comportant un moteur thermique (2) et une machine électrique (4) couplés entre eux par l'intermédiaire de l'embrayage (3) **caractérisé en ce qu'**il comporte les étapes suivantes,
- on vérifie que le moteur thermique (2) est à l'arrêt et que l'embrayage (3) est ouvert,
- on régule le régime (WMEL) de la machine électrique (4), vers un régime de consigne (WconsMEL),
- on régule le couple (CMEL) de la machine électrique (4) vers une valeur nulle, lorsque le régime (WMEL) de la machine électrique (4) a atteint son régime de consigne (WconsMEL),
- on mémorise la décélération du régime (WMEL) de la machine électrique (4),
- on ferme progressivement l'embrayage (3), de sorte qu'un couple résistif est transmis par l'embrayage (3) à la machine électrique (4) pour perturber son régime (WMEL), et
- on mémorise la position (Pemb) de l'actionneur de l'embrayage, correspondant au point de léchage (Plech) dès qu'une variation de la décélération de ladite machine (4) est supérieure à une valeur seuil.

2. Procédé selon la revendication 1, **caractérisé en ce que** pour calculer la décélération,
- on mesure à intervalle régulier le régime (WMEL) de la machine (4) et,
- on fait la différence entre le dernier régime mémorisé et le régime mémorisé précédent.

3. Procédé selon les revendications 1 ou 2, **caractérisé en ce que** l'intervalle entre les deux valeurs de régime est calibrable.

4. Procédé selon l'une des revendications 1 à 3, **caractérisé en ce que**, l'embrayage (3) demeure ouvert au moins jusqu'à ce que l'on ait atteint le régime de consigne (WconsMEL) de la machine électrique (4) et que son couple (CMEL) soit nulle.

5. Procédé selon l'une des revendications 1 à 4, **caractérisé en ce que** la fermeture de l'embrayage (3) s'effectue une fois que le régime (WMEL) de la machine électrique (4) est stabilisé à son régime de consigne (WconsMEL).

6. Procédé selon l'une des revendications 1 à 5, **caractérisé en ce que** la valeur seuil est calibrable.

7. Procédé selon l'une des revendications 1 à 6, **caractérisé en ce qu'**on détermine la position (Pemb) de l'actionneur de l'embrayage (3) au moyen d'un capteur de position.

8. Procédé selon l'une des revendications 1 à 7, **caractérisé en ce que** une fois que le point de léchage (Plech) est déterminé, l'embrayage (3) est ré-ouvert.

## Claims

1. A method for determining the biting point (Pbite) of a clutch (3) of a vehicle of the hybrid type on starting, the said vehicle comprising a thermal engine (2) and an electrical machine (4) coupled with each other by means of the clutch (3), **characterized in that** it comprises the following stages,
- it is verified that the thermal engine (2) is stopped and that the clutch (3) is open,
- the speed (WMEL) of the electrical machine (4) is regulated towards a set-point speed (WconsMEL),
- the torque (CMEL) of the electrical machine (4) is regulated towards a zero value when the speed (WMEL) of the electrical machine (4) has reached its set-point speed (WconsMEL),
- the deceleration of the speed (WMEL) of the electrical machine (4) is stored,
- the clutch (3) is progressively closed, so that a resistive torque is transmitted by the clutch (3) to the electrical machine (4) to disrupt its speed (WMEL), and
- the position (Pemb) of the actuator of the clutch is stored, corresponding to the biting point (Pbite)as soon as a variation of the deceleration of the said machine (4) is greater than a threshold value.

2. The method according to Claim 1, **characterized in that** to calculate the deceleration,
- the speed (WMEL) of the machine (4) is measured at a regular interval and
- a differentiation is made between the last stored speed and the preceding stored speed.

3. The method according to Claims 1 or 2, **characterized in that** the interval between the two speed values is able to be calibrated.

4. The method according to one of Claims 1 to 3, **characterized in that** the clutch (3) remains open at least until the set-point speed (WconsMEL) of the electrical machine (4) has been reached and its torque (CMEL) is zero.

5. The method according to one of Claims 1 to 4, **characterized in that** the closure of the clutch (3) is carried out once the speed (WMEL) of the electrical machine (4) is stabilized at its set-point speed (WconsMEL).

6. The method according to one of Claims 1 to 5, **characterized in that** the threshold value is able to be calibrated.

7. The method according to one of Claims 1 to 6, **characterized in that** the position (Pemb) of the actuator of the clutch (3) is determined by means of a position pick-up.

8. The method according to one of Claims 1 to 7, **characterized in that** once the biting point (Pbite) is determined, the clutch (3) is opened again.

## Patentansprüche

1. Verfahren zum Bestimmen des Schleifpunkts (Plech) einer Kupplung (3) eines Fahrzeugs des Hybridtyps beim Starten, wobei das Fahrzeug einen Verbrennungsmotor (2) und eine Elektromaschine (4) aufweist, die miteinander über die Kupplung (3) gekuppelt sind, **dadurch gekennzeichnet, dass** es die folgenden Schritte aufweist:
- man prüft, ob der Verbrennungsmotor (2) stillsteht und die Kupplung (3) offen ist,
- man regelt die Drehzahl (WMEL) der Elektromaschine (4) zu einer Solldrehzahl (WconsMEL),
- man regelt das Moment (CMEL) der Elektromaschine (4) zu einem Wert gleich null, wenn die Drehzahl (WMEL) der Elektromaschine (4) ihre Solldrehzahl (WconsMEL) erreicht hat,
- man speichert das Verringern der Drehzahl (WMEL) der Elektromaschine (4),
- man schließt die Kupplung (3) allmählich derart, dass ein Widerstandsmoment von der Kupplung (3) auf die Elektromaschine (4) übertragen wird, um ihre Drehzahl (WMEL) zu stören, und
- man speichert die Position (Pemb) des Betätigungselements der Kupplung, die dem Schleifpunkt (Plech) entspricht, sobald eine Variation der Verlangsamung der Maschine (4) größer ist als ein Schwellenwert.

2. Verfahren nach Anspruch 1, **dadurch gekennzeichnet, dass** man zum Berechnen der Verlangsamung
- in regelmäßigen Abständen die Drehzahl (WMEL) der Maschine (4) misst, und
- man den Unterschied zwischen der zuletzt gespeicherten Drehzahl und der zuvor gespeicherten Drehzahl berechnet.

3. Verfahren nach einem der Ansprüche 1 oder 2, **dadurch gekennzeichnet, dass** das Intervall zwischen den zwei Drehzahlwerten kalibrierbar ist.

4. Verfahren nach einem der Ansprüche 1 bis 3, **dadurch gekennzeichnet, dass** die Kupplung (3) mindestens offen bleibt, bis man die Solldrehzahl (WconsMEL) der Elektromaschine (4) erreicht hat und ihr Moment (CMEL) gleich null ist.

5. Verfahren nach einem der Ansprüche 1 bis 4, **dadurch gekennzeichnet, dass** das Schließen der Kupplung (3) erfolgt, sobald die Drehzahl (WMEL) der Elektromaschine (4) auf ihrer Solldrehzahl (WconsMEL) stabilisiert ist.

6. Verfahren nach einem der Ansprüche 1 bis 5, **dadurch gekennzeichnet, dass** der Schwellenwert kalibrierbar ist.

7. Verfahren nach einem der Ansprüche 1 bis 6, **dadurch gekennzeichnet, dass** man die Position (Pemb) des Betätigungselements der Kupplung (3) mittels eines Positionsfühlers bestimmt.

8. Verfahren nach einem der Ansprüche 1 bis 7, **dadurch gekennzeichnet, dass** die Kupplung (3), sobald der Schleifpunkt (Plech) bestimmt ist, wieder geöffnet wird.
